# EUROPÄISCHE PATENTANMELDUNG

(11) **EP 3 522 316 A1**
(43) Veröffentlichungstag der Anmeldung: **07.08.2019**
(21) Anmeldenummer: 18154488.3
(22) Anmeldetag: 31.01.2018
(51) Int. Cl.: H02G 3/08, H02G 15/007, H02G 15/013, H02G 15/10, H02G 3/22

(54) **GEHÄUSE UND VERFAHREN ZUR DURCHFÜHRUNG EINES LEITERS SOWIE ANLAGE**

(71) Anmelder: Siemens Aktiengesellschaft, 80333 München (DE)
(72) Erfinder: Burghard, Matthias Johannes, 12099 Berlin (DE); Festa, Marco, 14612 Falkensee (DE)

(57) **Zusammenfassung**

Zusammenfassend betrifft die Erfindung ein Verfahren zur Durchführung eines Leiters (5), ein Gehäuse (3) sowie eine Anlage. Eine Kraft (F), welche durch einen unterschiedlichen Druck (p1, p2) in einem Gehäuse (3) auf einen Leiter (5) wirkt, der durch das Gehäuse (3) geführt ist, kann durch zwei (Durchführung-) Öffnungen (2a, 2b, 9a) kompensiert werden, insofern die (Durchführungs-) Öffnungen (2a, 2b, 9a) einander zugewandt sind, d.h. einen Winkel (W) von 90° bis 180° aufweisen. Der Leiter (5) ist vorzugsweise T-förmig ausgebildet. Durch die Kompensation der Kraft (F) kann ein Leiter (5) mit einer höheren Querschnittfläche durch die (Durchführungs-) Öffnung (9a, 2a, 2b) des Gehäuses (3) geführt werden. Ein solcher Leiter (5) kann einen höheren Strom in das Gehäuse (3) überführen.

## Beschreibung

Die Erfindung betrifft ein Gehäuse und ein Verfahren zur Durchführung eines Leiters sowie eine Anlage.

Durchführungen eines Leiters durch ein Gehäuse bzw. in ein Gehäuse sind insbesondere bei einem Gehäuse mit technischen Schwierigkeiten behaftet, falls das Gehäuse einen Hochdruck oder Niederdruck (Vakuum) von einer Umgebung mit Normaldruck abgrenzt. Dies ist beispielhaft bei einer Pumpe oder einer Vakuumapparatur der Fall.

Gemäß dem Stand der Technik wird der Leiter senkrecht durch eine Öffnung des Gehäuses geführt. Ein Isolator verhindert einen elektrischen Kontakt zwischen dem Leiter und dem Gehäuse. Sind hohe Ströme durch den Leiter zu übertragen, bedarf es eines Leiters mit einem großen Durchmesser.

Auf einen Leiter mit einem hohen Durchmesser wirkt bei einem großen Druckunterschied eine hohe Kraft auf den Leiter. Der Leiter würde durch die Kraft in das Gehäuse hineingedrückt oder aus dem Gehäuse hinausgedrückt, wäre der Leiter nicht durch den Isolator fixiert.

Die zulässige Kraft auf den Leiter ist proportional zum Umfang des Leiters, während die Kraft auf den Leiter mit der Querschnittsfläche des Leiters ansteigt. Mithin ist der Querschnitt des Leiters begrenzt und damit auch eine mögliche Stromdurchführung.

Aufgrund konstruktiver Merkmale ist demnach der Stromübertrag durch einen solchen Leiter begrenzt.

Es ist demnach Aufgabe der Erfindung einen hohen Strom in ein Gehäuse zu übertragen.

Die Aufgabe wird durch ein Gehäuse nach Anspruch 1 gelöst.

Die Aufgabe wird weiter durch eine Anlage nach Anspruch 12 gelöst.

Darüber hinaus löst das Verfahren nach Anspruch 13 die Aufgabe.

Vorteilhafte Weiterbildungen und Ausführungsformen sind Gegenstand der abhängigen Ansprüche.

Bei dem Gehäuse zur Durchführung eines Leiters ist ein Leiter durch eine erste Öffnung und eine zweite Öffnung des Gehäuse oder durch ein Durchführungsgehäuse durchgeführt, wobei das Gehäuse eine Außenseite und eine Innenseite aufweist, wobei die Außenseite mit einem ersten Druck beaufschlagt ist und die Innenseite mit einem zweiten Druck beaufschlagt ist, wobei die erste und die zweite Öffnung einen Winkel von 90° bis 180° zueinander aufweisen.

Unter einem Leiter wird vorzugsweise ein elektrischer Leiter verstanden. Alternativ kann auch eine Rohrleitung zum Transport eines Gases oder einer Flüssigkeit als Leiter dienen.

Vorteilhaft sind der erste Druck und der zweite Druck unterschiedlich. Anstelle eines Gehäuses kann die Erfindung auch auf einen Teil eines Gehäuses Anwendung finden.

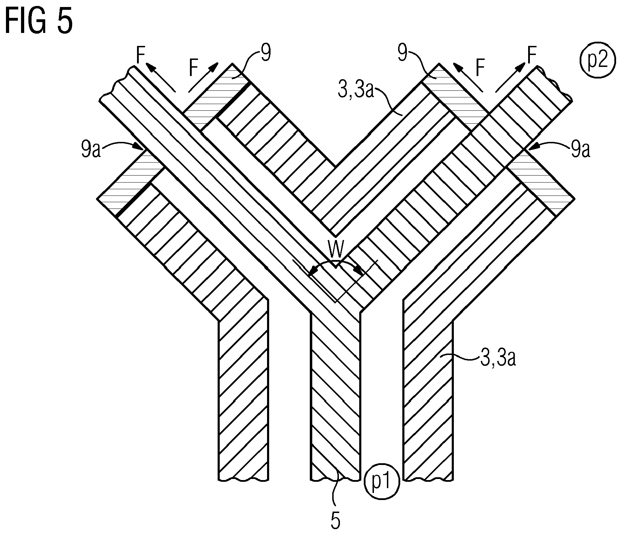

Der Winkel zwischen den Öffnungen ist der Winkel der jeweiligen Normalen-Vektoren der jeweiligen Öffnung. Bei einem Winkel von 180° sind die Öffnungen einander gegenüber positioniert, so dass man durch die erste Öffnung und die zweite Öffnung hindurchsehen kann. Bei einem Winkel von 90° stehen die Normalen-Vektoren der Öffnungen senkrecht zueinander. Eine solche Ausführung ist beispielhaft in FIG 5 gezeigt.

Der Leiter wird durch einen Aufsatz in der Öffnung positioniert. Der jeweilige Aufsatz dient zum Verschluss der jeweiligen Öffnung und der Leiter ist vorteilhaft durch eine Öffnung des jeweiligen Aufsatzes geführt. Der Leiter ist vorzugsweise durch eine Durchführung für den Leiter geführt und dort befestigt. Der jeweilige Aufsatz wird vorteilhaft mit dem Gehäuse fest verbunden.

Alternativ kann die Öffnung des Gehäuses mit einem Durchführungsgehäuse verschlossen sein, wobei das Durchführungsgehäuse zur Positionierung des Leiters dienen kann. Das Durchführungsgehäuse weist die beiden Öffnungen auf, wobei zumindest zwei der Öffnungen des Durchführungsgehäuses unter dem Winkel zueinander ausgerichtet sind. Vorzugsweise sind die Tangenten der Öffnung jeweils parallel oder windschief ausgerichtet (entspricht dem Winkel von 180°).

Vorteilhaft sind die Öffnungen des Gehäuses zueinander zeigend ausgerichtet. Zueinander ausgerichtet bedeutet hierbei, dass Normalenvektoren auf der jeweiligen Öffnung sich innerhalb des Gehäuses schneiden. Vorteilhaft laufen die Normalenvektoren aufeinander zu, dass heißt, dass die Öffnungen an zwei gegenüberliegenden Seiten angeordnet sind. Der Leiter verläuft vorteilhaft senkrecht durch die Öffnung. Der Leiter ist demnach parallel zum Normalenvektor ausgerichtet.

Das Gehäuse kann auch Teil eines mehrteiligen Gehäuses sein. Das Gehäuse dient zur Abgrenzung eines Innenraums von einer Umgebung. Der Innenraum weist einen ersten Druck, insbesondere einen erhöhten Druck oder einen verminderten Druck, vorzugsweise Hochdruck oder Vakuum, auf. Die die Umgebung weist einen zweiten Druck, in der Regel einen Normaldruck, auf.

Der Innenraum ist durch eine Innenseite des Gehäuses begrenzt und die Außenseite ist durch eine Außenseite des Gehäuses begrenzt.

Ein vorteilhafter Einsatzort ist ein Kompressor, wobei ein Leiter durch eine Wand des Gehäuses verläuft.

Das Gehäuse kann auch mit einem Durchführungsgehäuse verbunden sein. Das Durchführungsgehäuse dient zur Durchführung des Leiters. Das Durchführungsgehäuse weist vorteilhaft zumindest drei Öffnungen auf. Zumindest zwei der Öffnungen sind zur Durchführung des Leiters von der Umgebung in das Durchführungsgehäuse vorgesehen. Die weitere (dritte) Öffnung dient zur Verbindung einer Öffnung des Gehäuses mit dem Durchführungsgehäuse. Das Durchführungsgehäuse dient somit zum einen zum Verschluss einer Öffnung des Gehäuses und zum anderen zur Durchführung des Leiters von der Umgebung in das Gehäuse.

Die Öffnung dient zur Durchführung des Leiters durch das Gehäuse, wobei die jeweilige Öffnung größer als eine (Querschnitts-) Fläche des Leiters ist.

Der Leiter dient zur Überführung eines elektrischen Stroms in den Innenraum des Gehäuses.

Das Gehäuse ist vorteilhaft aus einem ferromagnetischen Werkstoff, wie einem Stahl, gefertigt.

Zur Verminderung von magnetischen Wirbelfeldern kann das (Durchführungs-) Gehäuse oder ein jeweiliger Aufsatz aus einem nicht-ferromagnetischen Material, wie Kuper oder Edelstahl, gefertigt sein.

Die jeweilige Öffnung ist vorteilhaft derart am Gehäuse oder an einem Durchführungsgehäuse angeordnet, dass die Öffnungen des Gehäuses oder des Durchführungsgehäuses durch eine gerade Linie verbindbar sind.

Die Öffnungen können auch parallel versetzt zu der Linie angeordnet ein, dass heißt, die Öffnungen müssen nicht überlappend sein.

Darüber hinaus können die Öffnungen durch eine geknickte oder gekrümmte Linie miteinander verbunden sein, wobei die Linie im Inneren des Gehäuses oder des Durchführungsgehäuses verläuft.

Die Linie stellt einen möglichen Verlauf des Leiters durch das Gehäuse dar.

Das Gehäuse kann derart ausgeführt sein, dass der Leiter durch die erste Öffnung in das Gehäuse eintritt und durch die zweite Öffnung wieder aus dem Gehäuse austritt. Kennzeichnend für die Ausrichtung der Öffnungen ist, dass ein Leiter durch die jeweilige Öffnung nicht parallel oder im Wesentlichen parallel verläuft.

Durch die hier beschriebene Anordnung kann die Kraft, die auf den Leiter wirkt, durch einen Ausgleich zumindest deutlich abgeschwächt werden, wobei die Kraft auf den Leiter durch die Differenz des ersten Druckes und des zweiten Druckes erzeugt wird. Dadurch, dass weniger Kraft auf den Leiter wirkt, kann die Befestigung des Leiters einfacher ausgebildet sein.

Bei einer vorteilhaften Ausgestaltung der Erfindung ist der Leiter jeweils durch einen Aufsatz durch die jeweilige Öffnung geführt, wobei der jeweilige Aufsatz die Öffnung verschließt.

Der Aufsatz dient zum Verschluss der jeweiligen Öffnung des Gehäuse oder des Durchführungsgehäuses. Der Aufsatz ist vorteilhaft aus einem nicht-ferromagnetischen Material wie Kupfer, Aluminium oder eine Legierung gefertigt. Der jeweilige Aufsatz dient zur Positionierung des Leiters, der durch die Öffnung geführt ist. Vorteilhaft ist zwischen dem Leiter und der den Leiter umschließenden Durchführungsöffnung ein Isolator positioniert. Der Isolator dient zur thermischen und elektrischen Isolation des Leiters. Der Isolator dient ggf. auch zur Abdichtung der Durchführung des Leiters durch den jeweiligen Aufsatz. Der Aufsatz wird vorzugsweise an dem Gehäuse fixiert.

Durch die Durchführung des Leiters durch die jeweilige Durchführungsöffnung des jeweiligen Aufsatzes wird der Leiter fest positioniert und die jeweilige Öffnung fest verschlossen.

Bei einer weiteren vorteilhaften Ausführung der Erfindung weist der Leiter einen Abzweig auf.

Unter einem Abzweig wird verstanden, dass der Leiter, der durch die beiden Öffnungen verläuft, zwischen den Öffnungen von einem anderen Leiter beaufschlagt oder mit dem anderen Leiter befestigt ist.

Der Abzweig dient zur Abnahme des Stroms oder der Spannung, der durch den Leiter in das Gehäuse geführt wird. Der Abzweig wird insbesondere nach der Durchführung oder der Befestigung des Leiters durch die jeweilige Öffnung montiert. Durch den Abzweig bildet sich ein T-förmiger Leiter aus.

Durch den Abzweig kann der Leiter vereinfacht durch die jeweilige Öffnung geführt werden. Durch den Abzweig wird weiter der Leiter vorteilhaft so ausgerichtet, als läge eine Durchführung gemäß dem Stand der Technik vor. Konstruktive Maßnahmen innerhalb des Gehäuses entfallen hierdurch.

Bei einer weiteren vorteilhaften Ausgestaltung der Erfindung weist der Leiter zumindest bereichsweise einen Isolator auf.

Da ein Leiter in der Regel Strom oder Wärme führt, kann bei einer mangelnden Isolation eine Ladungsübertragung zum Gehäuse führen.

Der Isolator kann im Bereich der jeweiligen Abdecklung verstärkt ausgeführt werden. Der Leiter ist vorzugsweise aus einem flexiblen Material gefertigt. Vorzugsweise umfasst der Isolator den Leiter auch außerhalb des Gehäuses. Alternativ kann der Isolator auch aus Keramik oder Teflon ausgebildet sein. Vorteilhaft trägt der Isolator auch zur thermischen Isolation des Leiters bei.

Ein Isolator, der zumindest bereichsweise den Leiter umfasst, vermindert vorteilhaft einen Stromüberschlag von dem Leiter zu dem Gehäuse, zu dem Aufsatz oder zu einem Durchführungsgehäuse.

Darüber hinaus dient der Isolator zur Verbesserung der Abdichtung des Innenraums des Gehäuses.

In einer vorteilhaften Ausgestaltung der Erfindung ist der Leiter T-förmig oder Y-förmig ausgeführt.

Bei der Verwendung eines T-förmigen oder Y-förmigen Leiters ist die Belastung durch die durch den Druckunterschied resultierende Kraft auf den Leiter und/oder des jeweiligen Aufsatzes besonders gering ausgebildet.

Bei einer weiteren vorteilhaften Ausgestaltung der Erfindung sind die Öffnungen zueinander parallel ausgebildet.

Die Öffnungen des Gehäuses sind vorteilhaft derart positioniert, dass die einander gegenüberliegend angeordnet sind. Mit anderen Worten verläuft der jeweilige Normalen-Vektor der jeweiligen Öffnung parallel.

Durch diese Ausgestaltung kann der Leiter als ein gerader Leiter ausgebildet sein. Der Leiter kann fest mit einem ersten Aufsatz verbunden sein, wobei der erste Aufsatz zur Abdeckung der ersten Öffnung dient. Der Leiter ist durch die zweite Öffnung geführt. Die zweite Öffnung ist mit einem zweiten Aufsatz, die zur Positionierung des Leiters dient, verschlossen.

Durch die parallele Ausbildung der Öffnungen kann der Leiter besonders einfach durch die Öffnungen geführt werden.

Bei einer weiteren vorteilhaften Ausgestaltung der Erfindung ist das Gehäuse mit einem Durchführungsgehäuse beaufschlagt, wobei das Durchführungsgehäuse die erste Öffnung und die zweite Öffnung aufweist und wobei das Durchführungsgehäuse eine Öffnung des Gehäuses verschließt.

Das Durchführungsgehäuse weist neben der ersten und zweiten Öffnung eine Öffnung zur Verbindung mit dem Gehäuse auf. Das Durchführungsgehäuse dient zur Aufnahme des Leiters. Das Durchführungsgehäuse weist ebenfalls eine Innenseite und eine Außenseite auf. Die Innenseite ist mit einem ersten Druck beaufschlagt und die Innenseite ist mit einem zweiten Druck beaufschlagt.

Die erste und zweite Öffnung werden zur Durchführung des Leiters jeweils mit dem Aufsatz verschlossen.

Durch das Durchführungsgehäuse kann bei dem Gehäuse die erste oder zweite Öffnung vorteilhaft entfallen oder mit einem Aufsatz verschlossen werden.

Das Durchführungsgehäuse kann wie ein T-Stück oder ein Y-Stück ausgeführt sein. Der jeweilige Querschnitt ist vorzugsweise rund oder eckig ausgeführt.

Durch die beiden gegenüberliegenden oder im spitzen Winkel ausbildenden Öffnungen durchläuft der Leiter das Durchführungsgehäuse.

Innerhalb des Durchführungsgehäuses ist der Abzweig des Leiters zu dem Leiter vorgesehen, welcher ungefähr senkrecht zur Innenseite des Gehäuses verläuft.

Das vorteilhaft T-förmig ausgebildete Durchführungsgehäuse, weist zwei Öffnungen auf, deren jeweilige Aufsätze parallel ausgerichtet sind.

Vorteilhaft ist der Leiter, der durch das Y-förmige Durchführungsgehäuse verläuft, mit demselben spitzen Winkel wie die einander zugewandten Öffnungen des Durchführungsgehäuses gebogen. Der Abzweig ist vorteilhaft etwa in der Mitte des Durchführungsgehäuses angeordnet.

Durch das Durchführungsgehäuse kann eine bereits vorhandene Öffnung des Gehäuses zur Durchführung eines Leiters dienen. Eine zusätzliche Öffnung muss nicht in das Gehäuse eingebracht werden.

Bei einer weiteren vorteilhaften Ausführung der Erfindung ist das Durchführungsteil auf einer Innenseite oder der Außenseite des Gehäuses angeordnet.

Das Durchführungsgehäuse schließt vorzugsweise eine Öffnung des Gehäuses. Das Durchführungsgehäuse kann dabei nach innen in das Gehäuse oder nach außen aus dem Gehäuse herausragen.

Vorteilhaft ist das Durchführungsgehäuse an der Außenseite des Gehäuses befestigt, insofern es nach außen ragt. Alternativ kann es auch auf der Außenseite befestigt sein, insofern es nach innen ragt. Vorteilhaft kann es aber auch an der Innenseite des Gehäuses fixiert sein, insofern das Durchführungsgehäuse nach innen, in das Gehäuse hinein ragt.

Bei dem nach innen ragenden Durchführungsgehäuse wird die Innenseite des Durchführungsgehäuse von dem ersten Druck beaufschlagt. Der Leiter wird dann durch die erste und die zweite Öffnung geführt und mit Hilfe des jeweiligen Aufsatzes in der Öffnung fixiert. Der Abzweig erfolgt mit dem Leiter, der in das Innere des Durchführungsgehäuses hineinragt.

Durch die Anordnung des Durchführungsgehäuses auf der Innenseite des Gehäuses ist das Durchführungsgefäß vorteilhaft nach innen gestülpt. Dadurch ist bei einer engen äußeren Umgebung des Gehäuses ein nach innen gerichtetes Durchführungsgehäuse vorteilhaft.

Die Kontaktstellen des Leiters, die sich im Inneren des Gehäuses befinden, sind vorteilhaft symmetrisch ausgeführt. So kann der elektrische Strom durch einen oder zwei Enden eines Leiters in das Gehäuse geführt werden.

Bei einer weiteren vorteilhaften Ausgestaltung der Erfindung ist das Durchführungsgehäuse, zumindest zum Teil, mit einem Isolationswerkstoff ausgefüllt.

Als Isolationswerkstoff dient vorzugsweise ein Kunststoff oder eine Keramik. Der Isolationswerkstoff fixiert den Leiter und isoliert den Leiter thermisch und elektrisch gegenüber der Innenseite des Durchführungsgehäuses ab.

Bei einer weiteren vorteilhaften Ausgestaltung der Erfindung ist zwischen dem Gehäuse und der jeweiligen Abdeckung und/oder dem Gehäuse und dem Durchführungsgehäuse jeweils eine Dichtung angeordnet.

Die Dichtung ist entweder aus einem flexiblen Material, z.B. Gummi, Kautschuk oder Silikon, oder aus einem weichen Metall, wie Kupfer, Aluminium oder Blei.

Die Dichtung wird vorteilhaft durch das jeweilige Befestigungsmittel zwischen dem Gehäuse und dem Durchführungsgehäuse, dem Gehäuse und dem jeweiligen Aufsatz und/oder dem Durchführungsgehäuse und dem jeweiligen Aufsatz in ihrer Position gehalten. Durch das jeweilige Befestigungsmittel des Aufsatzes bzw. dem Durchführungsgehäuse kann die Dichtung elastisch verformt werden, um die Dichtungseigenschaft zu verbessern.

Die Dichtung dichtet die jeweiligen Grenzen zwischen den einzelnen Elementen ab, so dass ein Druckausgleich zwischen dem Innenraum auf der Umgebung des Gehäuses verhindert wird.
In einer vorteilhaften Ausgestaltung der Erfindung ist der jeweilige Aufsatz zumindest teilweise aus einem nicht-ferromagnetischen Material ausgebildet.

Der jeweilige Aufsatz ist vorteilhaft aus Kunststoff oder einem nicht-Eisenmetall, wie Kupfer, Aluminium oder einer Legierung, ausgebildet. Weiter kann der Aufsatz auch aus einem hochveredelten Stahl ausgebildet sein.

Durch die Verwendung eines nicht-ferromagnetischen Materials werden magnetische Wechselfelder nicht verstärkt. Dies vermindert nachteilhafte magnetische Wirbelfelder, welche in der Regel zu Wärmeverlusten führen.

Bei einer weiteren Ausgestaltung der Erfindung sind das Gehäuse, der jeweilige Aufsatz und/oder das Durchführungsgehäuse zur Durchführung einer Mehrzahl von Leitern ausgebildet, wobei die Leiter derart angeordnet sind, dass Wirbelströme einander ausgeglichen werden.

Magnetische Wirbelströme entstehen insbesondere durch eine Dipol-Struktur der stromführenden Leiter. Beispielhaft ist dies der Fall, falls zwei Leiter in einem kurzen Abstand angeordnet sind, deren Stromrichtung entgegen ausgebildet ist.

Zur Verminderung der Wirbelströme ist es vorteilhaft, höhere Multipole durch Leitungen aufzubauen, wobei jeweils Dipol-Strukturen sich einander ausgleichen. Beispielhaft können zwei Dipol-Strukturen mit unterschiedlicher Polarität nebeneinander angeordnet sein. So entsteht eine Quadrupol-Anordnung, deren Wirbelströme schnell abfallen bzw. sich gegenseitig aufheben.

Die Anlage ist insbesondere als Kompressor, als Pumpe, Motor (eines Kompressors) oder als Vakuumapparatur ausgebildet. Die Anlage kann auch als Turbine ausgebildet sein. Die Anlage weist ein hier beschriebenes Gehäuse auf. Ein besonders vorteilhaftes Einsatzgebiet der Erfindung ist ein Motor, der in einer Pipeline zum Transport von Öl oder Gas eingesetzt wird.

Das Verfahren zur Durchführung eines Leiters durch ein Gehäuse umfasst zumindest folgende Schritte:
- Durchführen eines Leiters durch eine Durchführungsöffnung eines ersten Aufsatzes,
- Durchführung des Leiters durch die erste Öffnung des Gehäuses oder des Durchführungsgehäuses,
- Durchführung des Leiters durch die Durchführungsöffnung eines zweiten Aussatzes,
- Anordnung des zweiten Aufsatzes auf eine zweite Öffnung, wobei der erste Aufsatz und der zweite Aufsatz zueinander ausgerichtet sind oder die Öffnungen oder die Durchführungsöffnungen zueinander zeigend ausgerichtet sind.

Vorteilhaft erfolgt nach der Durchführung des Leiters bzw. der Installation des Abzweiges das zumindest teilweise Auffüllen des Durchführungsgehäuses mit dem Isolationswerkstoffs.

Das Verfahren kann vereinfacht werden, falls der Leiter oder zumindest der Teil des Leiters, der orthogonal zur Öffnung des Gehäuses verläuft, durch einen Abzweig mit dem Leiter verbunden wird.

Der Abzweig kann durch eine Klemmvorrichtung oder als eine Lotverbindung (durch Löten) ausgeführt sein.

Durch das Verfahren kann besonders einfach eine Durchführung eines Leiters erstellt werden, wobei Probleme bei der Dichtheit der Grenzflächen, insbesondere zwischen dem jeweiligen Aufsatz und dem Leiter, vermindert werden.

Durch den sich ergebenden Aufbau können besonders hohe Druckunterschiede zwischen der Innenseite und der Außenseite bestehen, ohne dass eine nennenswerte Kraft auf den Leiter wirkt.

In einer weiteren Ausführung der Erfindung wird der Leiter über einen Abzweig T-förmig oder Y-förmig ausgeführt. Durch diese Ausgestaltung ist der Leiter an einer mittleren Position in einer Richtung verlängert.

Vorteilhaft wird der Abzweig erst nach der Montage des Durchführungsgehäuses mit dem Leiter verbunden. Der zunächst durch das Gehäuse, das Durchführungsgehäuse und/oder durch den jeweiligen Aufsatz durchgeführte Leiter verläuft in der Regel parallel zur Innenseite/Außenseite des Gehäuses. Durch den Abzweig kann ein Verbraucher innerhalb des Gehäuses mit dem Leiter verbunden werden, um mit Spannung/Strom oder mit einem Gas bzw. einer Flüssigkeit versorgt zu werden.

Voreitelhaft dient der Leiter auch zum Abtransport von Wärmeenergie des Verbrauchers, insbesondere bei Vakuumanlagen.

Im Folgenden wird die Erfindung anhand von Figuren näher beschrieben und erläutert. Die gezeigten Ausführungsformen sind lediglich beispielhafte Ausführungen und schränken die Erfindung keinesfalls ein. Die in den Figuren gezeigten Merkmale können hierbei einzeln oder in Ihrer Gesamtheit zu neuen Ausführungsformen kombiniert werden.

Es zeigen:
- FIG 1: ein Gehäuse nach dem Stand der Technik,
- FIG 2: eine erste Ausführung einer Durchführung,
- FIG 3: eine zweite Ausführung der Durchführung,
- FIG 4: eine dritte Ausführung der Durchführung sowie
- FIG 5: eine vierte Ausführung der Durchführung.

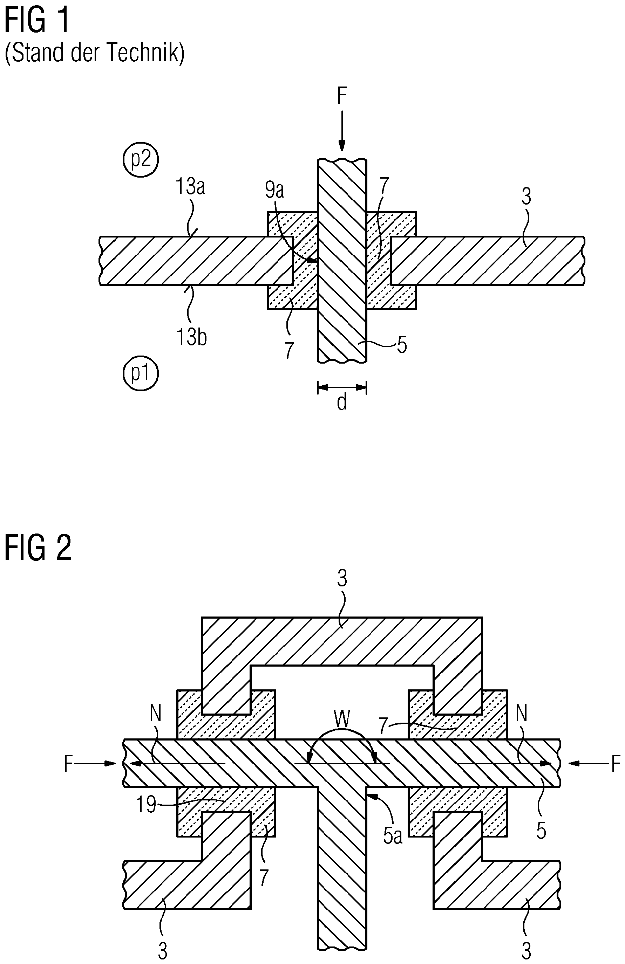

FIG 1 zeigt ein Gehäuse 3 mit Durchführung nach dem Stand der Technik. Zur verbesserten Übersicht ist jeweils nur ein Ausschnitt des Gehäuses 3 dargestellt. Das Gehäuse 3 weist eine Öffnung 2a, 2b auf. Die Öffnung 2a, 2b umfasst einen Isolator 7. Der Isolator 7 weist eine Durchführungsöffnung 9a auf, wobei die Durchführungsöffnung 9a zu einer Durchführung eines Leiters 5 dient. Der Isolator 7 dient zur Isolation des Leiters 5 von dem Gehäuse 3. Die Durchführungsöffnung 9a ist hier in dem Isolator 7 positioniert. Der Isolator 7 dient überdies zur Abdichtung der Öffnung 2a, 2b des Gehäuses. Das Gehäuse 3 weist eine Außenseite 13a und eine Innenseite 13b auf. Auf der Innenseite 13b des Gehäuses 3 wirkt ein erster Druck p1. Auf die Außenseite 13a des Gehäuses 3 wirkt ein zweiter Druck p2. Bei unterschiedlichem Drücken p1, p2 wirkt eine Kraft F auf den Leiter 5, wobei der Leiter 5 durch die Kraft F eine Beschleunigung erfahren würde wäre er nicht durch den Isolator 7 in seiner Position fixiert.

Nachfolgend wird daher die Kraft F auf den Leiter 5 jeweils ausgelichen.

FIG 2 zeigt eine erste Ausführung der Durchführung. Gezeigt ist ein Gehäuse 3, wobei das Gehäuse 3 eine erste Öffnung 2a und eine zweite Öffnung 2b aufweist. Die Öffnungen weisen jeweils einen Normalenvektor N auf. Die Öffnung 2a, 2b wird jeweils durch einen Isolator 7 von dem durch die Öffnung 2a, 2b hindurchgehenden Leiter 5 abgedichtet. Der Leiter 5 ist hierbei wie ein T-Stück ausgeführt. Der Leiter zwischen den Öffnungen 2a, 2b weist einen Winkel W von 180° auf. Die Kraft F, welche auf den Leiter 5 durch unterschiedliche Drücke p1, p2 wirkt, ist durch die symmetrische Ausführung der Leiterdurchführung 1 kompensiert. Der Leiter 5 weist in seiner Mitte ein Abzweig 5a auf, wobei der Abzweig 5a zur Verbindung des oberen geraden Leiters 5 mit dem nach unten zeigenden Abschnitt des Leiters 5 vorgesehen ist.

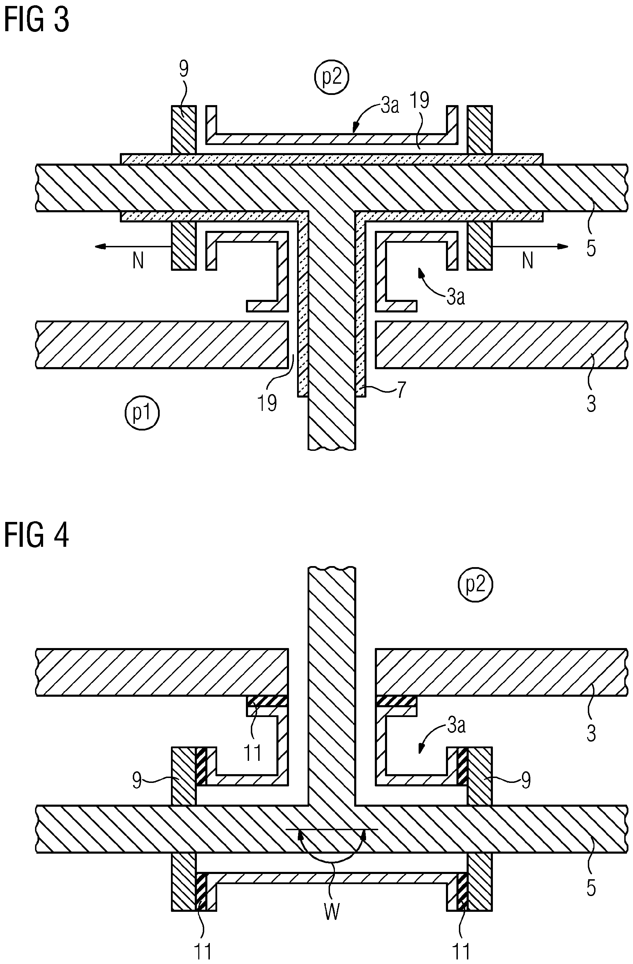

FIG 3 zeigt eine zweite Ausführung der Durchführung. Das Gehäuse 3 ist mit einem Durchführungsgehäuse 3a beaufschlagt, wobei das Durchführungsgehäuse 3a auf einer Öffnung 2a, 2b des Gehäuses 3 aufsitzt. Das Durchführungsgehäuse 3a ist T-förmig ausgeführt, wobei das Durchführungsgehäuse 3a vorzugsweise zylinderförmig mit einer Verbindung zum Gehäuse 3 ist. Das Durchführungsgehäuse 3a umschließt teilweise den Leiter 5, wobei der Leiter 5 bereichsweise mit einem Isolator 7 versehen ist. Zum Verschluss der jeweiligen Öffnung 2a, 2b des Durchführungsgehäuses 3a dient jeweils ein Aufsatz 9. Die Aufsätze 9 sind hier parallel zueinander angeordnet. Normalenvektor N des jeweiligen Aufsatzes 9 weisen einen Winkel W von 180° zueinander auf. Der jeweilige Aufsatz 9 ist fest mit dem Leiter 5 oder dem Isolator 7 um den Leiter 5 verbunden. Der Leiter 5 ist jeweils durch eine Durchführungsöffnung 9a des jeweiligen Aufsatzes 9 geführt. Auf der Außenseite 13a des Durchführungsgehäuses 3a und des Gehäuses 3 wirkt ein zweiter Druck p2. Auf der Innenseite 13b des Gehäuses 3 und des Durchführungsgehäuses 3a wirkt der erste Druck p1. Zur Verhinderung des einen Druckausgleiches zwischen dem ersten Druck p1 und dem zweiten Druck p2 sind die Verbindungen zwischen dem Gehäuse 3 und dem Durchführungsgehäuse 3a sowie die Flächen zwischen dem Durchführungsgehäuse 3a und dem jeweiligen Aufsatz 9 dicht verschlossen. Vorteilhaft bei der gezeigten Ausführung ist überdies jeweils eine Dichtung 11, wie in FIG 4 gezeigt.

FIG 4 zeigt eine dritte Ausführung der Leiterdurchführung 1. Kennzeichnend für die hier gezeigte Ausführung ist, dass das Durchführungsgehäuse 3a an der Innenseite des Gehäuses 3 angeordnet ist. Das Durchführungsgehäuse 3a ragt also nach innen in das Gehäuse 3 hinein. Zwischen den jeweiligen Flächen des Aufsatzes 9 und dem Durchführungsgehäuse 3a sowie dem Durchführungsgehäuse 3a und dem Gehäuse 3, ist jeweils eine Dichtung 11 positioniert. Die Dichtung 11 dient zum luftdichten Verschluss zwischen dem ersten Druck p1 innerhalb des Gehäuses 3 und dem zweiten Druck p2 außerhalb des Gehäuses 3.

Auch hier sind die nach innen zeigenden Flächen des jeweiligen Aufsatzes 9 zueinander ausgerichtet. Der jeweilige Aufsatz 9 ist demnach parallel ausgerichtet.

FIG 5 zeigt eine vierte Ausführung der Leiterdurchführung. Kennzeichnend für die hier gezeigte Ausführung ist, dass die Aufsätze 9 senkrecht zueinander zugeordnet sind. Die Kraft F, welche auf den Leiter 5 in eine Richtung wirkt, wird von dem einen Aufsatz kompensiert. Der andere Aufsatz 9 kompensiert die Kraft F, welche orthogonal zu dem anderen Aufsatz wirkt.

Zusammenfassend betrifft die Erfindung ein Verfahren und ein Gehäuse 3 zur Durchführung eines Leiters 5 und eine Anlage. Eine Kraft F, welche durch einen unterschiedlichen Druck p1, p2 in einem Gehäuse 3 auf einen Leiter 5 wirkt, der durch das Gehäuse 3 geführt ist, kann durch zwei (Durchführung-) Öffnungen 2a, 2b, 9a kompensiert werden, insofern die (Durchführungs-) Öffnungen 2a, 2b, 9a einander zugewandt sind, d.h. einen Winkel (W) von 90° bis 180° aufweisen. Der Leiter 5 ist vorzugsweise T-förmig ausgebildet. Durch die Kompensation der Kraft F kann ein Leiter 5 mit einer höheren Querschnittfläche durch die (Durchführungs-) Öffnung 2a, 2b, 9a des Gehäuses 3 geführt werden. Ein solcher Leiter 5 kann einen höheren Strom in das Gehäuse 3 überführen.

## Patentansprüche

1. Gehäuse (3) zur Durchführung eines Leiters (5), wobei der Leiter (5) durch eine erste Öffnung (2a) und eine zweite Öffnung (2b) des Gehäuses (3) durchgeführt ist, wobei das Gehäuse (3) eine Außenseite (13a) und eine Innenseite (13b) aufweist, wobei die Außenseite (13a) mit einem ersten Druck (p1) beaufschlagt ist und die Innenseite (13b) mit einem zweiten Druck (p2) beaufschlagt ist,
**dadurch gekennzeichnet, dass** die erste Öffnung (2a) und die zweite Öffnung (2b) in einem Winkel von 90° bis 180° zueinander aufweisen.

2. Gehäuse (3) nach Anspruch 1,
**dadurch gekennzeichnet, dass** der Leiter (5) jeweils durch einen Aufsatz (9) durch die jeweilige Öffnung (2a, 2b) geführt ist, wobei der jeweilige Aufsatz die Öffnung (2a, 2b) verschließt.

3. Gehäuse (3) nach einem der Ansprüche 1 oder 2,
**dadurch gekennzeichnet, dass** der Leiter einen Abzweig (5a) aufweist.

4. Gehäuse (3) nach einem der vorangehenden Ansprüche, wobei der Leiter (5) zumindest bereichsweise einen Isolator (7) aufweist.

5. Gehäuse (3) nach einem der vorangehenden Ansprüche, wobei der Leiter (5) T-förmig oder Y-förmig ausgeführt ist.

6. Gehäuse (3) nach einem der vorangehenden Ansprüche, wobei das Gehäuse (3) mit einem Durchführungsgehäuse (3a) beaufschlagt ist, wobei das Durchführungsgehäuse (3a) die erste Öffnung (2a) und die zweite Öffnung (2a) aufweist und wobei das Durchführungsgehäuse (3a) eine Öffnung des Gehäuses (3) verschließt.

7. Gehäuse (3) nach Anspruch 6,
**dadurch gekennzeichnet, dass** das Durchführungsgehäuse (3a) auf der Innenseite (13a) des Gehäuses (3) oder an der Außenseite (13b) des Gehäuses (3) angeordnet ist.

8. Gehäuse (3) nach Anspruch 6 oder 7, wobei das Innere des Durchführungsgehäuses (3a) zumindest teilweise mit einem Isolationswerkstoff ausgefüllt ist.

9. Gehäuse (3) nach einem der vorangehenden Ansprüche, wobei zwischen dem Gehäuse (3) und der jeweiligen Abdeckung (8) und/oder dem Gehäuse (3) und dem Durchführungsgehäuse (3a) jeweils eine Dichtung (11) angeordnet ist.

10. Gehäuse (3) nach einem Ansprüche 2 bis 9, wobei der jeweilige Aufsatz (9) zumindest teilweise aus einem nicht-ferromagnetischen Material ausgebildet ist.

11. Gehäuse (3) nach einem der vorangehenden Ansprüche, wobei das Gehäuse (3) oder das Durchführungsgehäuse (3a) zur Durchführung einer Mehrzahl von Leitern (5) ausgebildet ist, wobei die Leiter (5) derart angeordnet sind, dass Wirbelströme einander ausgeglichen werden.

12. Anlage, insbesondere ein Kompressor, eine Pumpe, ein Motor oder eine Vakuumapparatur, aufweisend ein Gehäuse (3) nach einem der vorangehenden Ansprüche.

13. Verfahren zur Durchführung eines Leiters (5) durch ein Gehäuse (3) oder durch ein Durchführungsgehäuse (3a), umfassend zumindest folgende Schritte:
- Durchführen eines Leiters (5) durch eine Durchführungsöffnung (9a) eines ersten Aufsatzes (9),
- Durchführung des Leiters durch die erste Öffnung (2a) des Gehäuse (3) oder des Durchführungsgehäuses (3a),
- Durchführung des Leiters durch die Durchführungsöffnung eines zweiten Aufsatzes (9),
- Anordnung des zweiten Aufsatzes (9) auf eine zweite Öffnung (2b)
**dadurch gekennzeichnet, dass** der erste Aufsatz (9) und der zweite Aufsatz (9) zueinander ausgerichtet sind oder die Öffnungen (2a, 2b) zueinander zeigend ausgerichtet sind.

14. Verfahren nach Anspruch 13, wobei der Leiter über einen Abzweig T-förmig oder Y-förmig ausgeführt ist.
